# EUROPÄISCHE PATENTANMELDUNG

(11) **EP 4 484 265 A1**
(43) Veröffentlichungstag der Anmeldung: **01.01.2025**
(21) Anmeldenummer: 24183778.0
(22) Anmeldetag: 21.06.2024
(51) Int. Cl.: B62L 1/00, B62K 27/00

(54) **DREHMOMENTSTÜTZE FÜR GEFEDERTE FAHRZEUGANHÄNGER MIT RADSCHWINGE**

(30) Priorität: 21.06.2023 DE 202023103453 U
(71) Anmelder: Croozer GmbH, 50354 Hürth (DE)
(72) Erfinder: GEHLEN, Andreas, 50829 Köln (DE)
(74) Vertreter: Lenzing Gerber Stute

(57) **Zusammenfassung**

Die vorliegende Erfindung betrifft einen Fahrzeuganhänger, insbesondere für ein Fahrrad oder ein Pedelec, mit einem Chassis (1) und mindestens einer an dem Chassis (1) angeordneten Radschwinge (2) mit mindestens einem Rad, sowie mit mindestens einer von der Radschwinge gehaltenen Funktionseinrichtung zum Bremsen und/oder Beschleunigen eines Rades. Um ein sicheres und angenehmes Fahrverhalten zu ermöglichen und den Verschleiß zu reduzieren, weist der Fahrradanhänger eine Drehmomentstütze (14) auf, mit der die Funktionseinrichtung unter Umgehung der Radschwinge (2) am Chassis (1) abstützbar ist.

## Beschreibung

Die vorliegende Erfindung betrifft einen Fahrzeuganhänger, insbesondere für ein Fahrrad oder ein Pedelec, mit einem Chassis und mindestens einer an dem Chassis angeordneten Radschwinge mit mindestens einem Rad, sowie mit mindestens einer von der Radschwinge gehaltenen Funktionseinrichtung zum Bremsen und/oder Beschleunigen des Rades.

Am Markt steht eine Vielzahl an Fahrradanhängern zur Verfügung, die unter anderem dem Transport von Kindern, Tieren oder Gütern dienen. Viele dieser Anhänger sind herstellerseitig für Gesamtmassen bis 200 kg konzipiert und weisen daher ein großes Transportpotential auf. Jedoch ist das maximal zulässige Gesamtgewicht für ungebremste Fahrradanhänger durch die StVO auf 60 kg begrenzt. Um das Transportpotential dieser Anhänger vollständig auszuschöpfen und einen sicheren Betrieb zu gewährleisten, werden daher vermehrt Funktionseinrichtungen wie Bremseinrichtungen verbaut. Ebenso werden Fahrradanhänger zunehmend mit elektrischen Antrieben ausgestattet, wodurch der Fahrer des Zugfahrzeugs entlastet oder von dem Fahrradanhänger sogar geschoben wird und daher auch große Lasten problemlos transportiert werden können.

Zur Erhöhung von Sicherheit und Komfort, sind Fahrradanhänger regelmäßig mit gefederten und gedämpften Radaufhängungen ausgestattet. Die Radaufhängung kann beispielsweise eine Radschwinge aufweisen, die an einem Ende an dem Chassis des Fahrradanhängers gelagert ist. An dem anderen Ende der Radschwinge ist ein Rad gelagert. Die Radschwinge kann von einer Feder- und/oder Dämpfereinrichtung beaufschlagt werden. Auf diese Weise können die Räder des Fahrradanhängers gegenüber dem Chassis in einer im Wesentlichen vertikalen Richtung schwingen bzw. ein- und ausfedern. Auf diese Weise werden Stöße während der Fahrt durch Unebenheiten in der Fahrbahn nicht unmittelbar auf das Chassis und in den Innenraum des Fahrradanhängers übertragen.

Damit die eingangs genannten Funktionseinrichtungen, die beispielsweise zum Beschleunigen oder Bremsen des Fahrradanhängers dienen, ein Drehmoment auf die Räder aufbringen können, werden diese üblicherweise unmittelbar oder mittelbar an der Radschwinge befestigt bzw. an dieser abgestützt. Zum mittelbaren Abstützen können beispielsweise Drehmomentstützen verwendet werden, die mit der Funktionseinrichtung einerseits und mit der Radschwinge andererseits verbunden bzw. koppelbar sind, wodurch die auf die Funktionseinrichtung wirkenden Kräfte beim Beschleunigen oder Bremsen vollständig über die Radschwinge auf das Chassis übertragen werden.

Problematisch dabei ist jedoch, dass der Hebelarm der Drehmomentstütze aufgrund des beschränkten Bauraums wesentlich kürzer als der Radradius ist, sodass das auf die Radschwinge wirkende Drehmoment wesentlich größer als das durch den Beschleunigungs- oder Bremsvorgang am Rad wirkende Drehmoment ist. Dieses hohe Drehmoment führt dazu, dass die Radschwinge beim Bremsvorgang unbeabsichtigt in die eine und beim Beschleunigungsvorgang in die andere Richtung rotieren kann, was zu einem Nicken des Fahrradanhängers führt. Die Folge ist ein instabiles Fahrverhalten sowie eine verminderte Kontrollierbarkeit des Fahrradanhängers. Ferner wird die Radschwinge durch die hohen Kräfte stark belastet, sodass es durch einen erhöhten Verschleiß zu einer Verringerung der Lebensdauer der Radschwinge kommen kann.

Aus DE 10 2015 006 160 B4 ist ein Schubanhänger mit Antrieb und Auflaufbremse bekannt. Bei dem Schubanhänger wird eine Betätigung der Auflaufbremse im Schubbetrieb verhindert, während die Auflaufbremsfunktion bei abgeschaltetem Antrieb ihre Wirkung entfaltet. Der Antrieb des Anhängers weist dazu eine Drehmomentstütze auf, die drehbar um die Radachse gelagert ist. An der Drehmomentstütze greift eine Druck- oder Zugstrebe an, über die die Schubkraft in die Deichsel und an das Zugfahrzeug übertragen wird. Beim Bremsvorgang des Zugfahrzeugs bewirkt die auf die Deichsel wirkende Kraft eine Verdrehung der Drehmomentstütze, wodurch die Auflaufbremse betätigt wird. Der Schubanhänger weist jedoch keine gefederte und/oder gedämpfte Radaufhängung mit einer Radschwinge auf.

Aufgabe der vorliegenden Erfindung ist es daher, einen gefederten und/oder gedämpften Fahrradanhänger mit Radschwinge und einer Funktionseinrichtung bereitzustellen, der ein sicheres und angenehmes Fahrverhalten ermöglicht und verschleißärmer ist.

Diese Aufgabe wird mit einem Fahrzeuganhänger gemäß Anspruch 1 dadurch gelöst, dass die Funktionseinrichtung mindestens eine Drehmomentstütze aufweist, mit der die Funktionseinrichtung unter Umgehung der Radschwinge am Chassis abstützbar ist. Kerngedanke des erfindungsgemäßen Fahrzeuganhängers ist es, die gefederte und/oder gedämpfte Aufhängung der Räder einerseits und die Übertragung der im Betrieb auf die Funktionseinrichtung durch Bremsen oder Beschleunigen wirkenden Kräfte auf das Chassis andererseits mittels unterschiedlicher Bauteile zu realisieren. Aus diesem Grund ist eine Drehmomentstütze vorgesehen, über die die Funktionseinrichtung am Chassis abstützbar ist und die weder unmittelbar noch mittelbar ein Drehmoment auf die Radschwinge übertragen kann. Auf diese Weise werden die Kräfte der Funktionseinrichtung überwiegend oder nahezu vollständig über die Drehmomentstütze in das Chassis eingeleitet. Die Radschwinge hingegen dient daher ausschließlich der Aufhängung sowie der Federung und/oder Dämpfung der Räder.

Das Schwingungsverhalten der Radschwinge wird somit bei dem erfindungsgemäßen Fahrzeuganhänger durch die auf die Funktionseinrichtung wirkenden Kräfte nicht oder nahezu nicht beeinflusst, sodass ein unkontrolliertes Rotieren der Radschwinge und ein Nicken des Fahrzeuganhängers verhindert wird. Der erfindungsgemäße Fahrzeuganhänger weist daher ein deutlich stabileres und sichereres Fahrverhalten auf. Besonders vorteilhaft ist dies im Hinblick auf große Lastfälle wie einer Gefahrenbremsung, bei der das Gespann aus Zugfahrzeug und Fahrzeuganhänger ohnehin bereits durch die starke Geschwindigkeitsverzögerung schwer kontrollierbar sein kann. Vorteilhaft bei dem erfindungsgemäßen Fahrzeuganhänger ist ferner, dass Drehmomentstütze und Radschwinge gezielt für ihre jeweilige Funktion konstruiert und ausgelegt werden können, wodurch die Lebensdauer verlängert werden kann.

Grundsätzlich kann die Drehmomentstütze sowohl einteilig als auch mehrteilig ausgeführt sein. Denkbar ist auch, dass der erfindungsgemäße Fahrzeuganhänger bei besonders großen Kräften mehrere Drehmomentstützen für eine Funktionseinrichtung aufweist.

In einer Ausführungsform des Fahrzeuganhängers ist die Funktionseinrichtung durch die Einleitung einer im Wesentlichen horizontalen Kraft von der Drehmomentstütze in das Chassis abstützbar. Auf diese Weise kann erreicht werden, dass bei einer im Wesentlichen vertikalen Auslenkung der Räder der Teil der Drehmomentstütze, auf den die Funktionseinrichtung zur Kraftübertragung wirkt, zumindest teilweise zusammen mit dem Rad und der Funktionseinrichtung ausgelenkt werden kann, sodass die Feder- und Dämpfungsfunktion des Fahrzeuganhängers durch die Drehmomentstütze nicht beeinträchtigt wird.

Zur Krafteinleitung in das Chassis ist die Drehmomentstütze vorzugsweise mit dem Chassis gekoppelt. Alternativ oder zusätzlich kann auch ein Anschlag vorgesehen sein, mit dem sich die Drehmomentstütze an dem Chassis, also chassisseitig, abstützen kann. In einer weiteren Ausführungsform des Fahrzeuganhängers ist die Drehmomentstütze mit der Funktionseinrichtung gekoppelt und/oder es ist ein Anschlag vorgesehen, über den sich die Funktionseinrichtung an der Drehmomentstütze abstützen kann. Der Anschlag kann an der Funktionseinrichtung und/oder an der Drehmomentstütze angeordnet sein. Wesentlich für die Kopplung bzw. das Abstützen von der Drehmomentstütze an dem Chassis und von der Funktionseinrichtung an der Drehmomentstütze ist, dass eine Relativbewegung von Rad und Funktionseinrichtung gegenüber dem Chassis möglich ist und die Funktion der Radschwinge durch die Drehmomentstütze nicht eingeschränkt wird.

Um sicherzustellen, dass von der Drehmomentstütze kein Drehmoment auf die Radschwinge übertragen werden kann, weist die Drehmomentstütze zumindest einen rotierbaren Teil auf, der um eine durch die Radschwinge verlaufende Lagerachse der Funktionseinrichtung rotierbar ist. Damit auch von der Funktionseinrichtung kein Drehmoment auf die Radschwinge übertragen werden kann und dieses stattdessen auf die Drehmomentstütze übertragen wird, kann zumindest ein Teil der Funktionseinrichtung gemeinsam mit dem einen rotierbaren Teil der Drehmomentstütze um die Lagerachse der Funktionseinrichtung rotieren.

Darüber hinaus beschreibt die von der Radschwinge gehaltene Funktionseinrichtung bei einer Rotation der Radschwinge naturgemäß eine Kreisbahn. Dadurch verändert sich der horizontale Abstand von der Lagerachse der Funktionseinrichtung zu der Lagerachse der Radschwinge am Chassis. Diese Veränderung kann ebenfalls durch den vorab genannten rotierbaren Teil der Drehmomentstütze und die gemeinsame Rotation der Drehmomentstütze mit einem Teil der Funktionseinrichtung ausgeglichen werden. Auch werden dadurch die Kräfte von der Funktionseinrichtung unabhängig vom Rotationswinkel der Radschwingen stets im selben Bereich bzw. in denselben Bereichen auf die Drehmomentstütze übertragen. Zusätzlich kann die äußere Kontur des rotierbaren Teils der Drehmomentstütze unterschiedliche Abstände zu der Lagerachse aufweisen. Dadurch kann die Drehmomentstütze durch eine Rotation in horizontaler Richtung verlängert bzw. verkürzt werden. Beispielsweise kann die Drehmomentstütze ein Hebelelement aufweisen.

In einer weiteren Ausführungsform weist die Drehmomentstütze eine Stützschwinge auf, die rotierbar an dem Chassis gelagert ist. Die Stützschwinge wird vorzugsweise parallel zu der Radschwinge ausgelenkt. Insbesondere stützt sich die Stützschwinge am Chassis ab und/oder ist mit diesem gekoppelt.

Vorzugsweise weist die Drehmomentstütze zusätzlich zur Stützschwinge eine Stützplatte auf, wobei Stützschwinge und Stützplatte in einem Lagerpunkt über ein Gelenk miteinander verbunden sind, sodass diese relativ zueinander rotieren können. Es ist denkbar, dass die Stützplatte um die durch die Radschwinge verlaufende Lagerachse der Funktionseinrichtung rotierbar ist und so einen rotierbaren Teil der Drehmomentstütze bildet. Die Stützplatte ist in dieser Ausführungsform mit zumindest einem Teil der Funktionseinrichtung fest verbunden. Es ist auch möglich, dass die Stützplatte nicht Bestandteil der Drehmomentstütze, sondern Bestandteil der Funktionseinrichtung ist. Dabei beträgt der maximale Längenunterschied der kürzesten Strecke zwischen dem Lagerpunkt der Stützschwinge an der Stützplatte und der Koppel- bzw. Abstützstelle der Stützschwinge am Chassis sowie der kürzesten Strecke zwischen der Lagerachse der Funktionseinrichtung an der Radschwinge zu der Lagerachse der Radschwinge an dem Chassis maximal 20 %, vorzugsweise 10 % oder besonders bevorzugt 5 %. Insbesondere bilden die beiden Strecken unabhängig vom Rotationswinkel im Wesentlichen zwei gegenüberliegende Seiten eines Parallelogramms.

In noch einer weiteren Ausführungsform kann die Drehmomentstütze ein Eingriffselement zum Eingriff in eine Kulisse eines Kulissenelements aufweisen. Das Eingriffselement kann beispielsweise ein Kulissenstein sein, der in einer im Wesentlichen senkrechten oder zumindest teilweise kreisbahnförmigen Kulisse geführt wird. Das Kulissenelement kann mit der Funktionseinrichtung gekoppelt sein, während das Kulissenelement mit dem Chassis gekoppelt ist, oder umgekehrt.

In einer Ausführungsform ist die Funktionseinrichtung als Bremseinrichtung ausgebildet. Die Bremseinrichtung kann beispielsweise im Sinne einer Auflaufbremse bei einer Verzögerung des Zugfahrzeugs automatisch auslösen. Ebenso kann die Bremseinrichtung jedoch auch gezielt von dem Fahrer des Zugfahrzeugs mechanisch, hydraulisch und/oder elektrisch betätigt werden.

Die Bremseinrichtung ist vorzugsweise als mechanische Bremse ausgeführt, insbesondere als Trommelbremse oder Scheibenbremse. In diesem Fall weist die Bremseinrichtung mindestens einen ersten Funktionsteil auf, der im Betrieb des Fahrzeuganhängers mit dem mindestens einen Rad rotiert. Ferner weist die Bremseinrichtung einen zweiten Funktionsteil auf, der eingerichtet ist, ein Bremsmoment auf das mindestens eine Rad aufzubringen. Dabei ist der zweite Funktionsteil zum Aufbringen der Kräfte auf das Rad über die Drehmomentstütze am Chassis abstützbar.

In einer weiteren Ausführungsform ist die mindestens eine Funktionseinrichtung des Fahrzeuganhängers ein elektrischer Antrieb, insbesondere ein Elektromotor. Dabei kann der elektrische Antrieb nicht nur zu Beschleunigung, sondern auch in bekannter Weise zum Bremsen als elektromotorische Bremse eingesetzt werden.

In noch einer weiteren Ausführungsform weist der Fahrzeuganhänger zwei oder mehr Funktionseinrichtungen zum Bremsen und/oder Beschleunigen auf, wobei eine erste Funktionseinrichtung eine Bremseinrichtung und eine zweite Funktionseinrichtung ein elektrischer Antrieb ist. Dabei können die Funktionseinrichtungen hintereinander angeordnet sein und eine gemeinsame Lagerachse aufweisen, sodass sie auf dasselbe Rad wirken. Dies bedeutet, dass dasselbe Rad von der einen Funktionseinrichtung gebremst und von der anderen beschleunigt werden kann. Zwar können sich beide Funktionseinrichtungen über eine gemeinsame Drehmomentstütze am Chassis abstützen. Es ist aber von Vorteil, wenn sich auch die zweite Funktionseinrichtung über eine eigene Drehmomentstütze unter Umgehung der Radschwinge am Chassis abstützt. Dabei sind dann die Drehmomentstützen separat und unabhängig voneinander um die gemeinsame Lagerachse der Funktionseinrichtungen rotierbar. Dadurch ist sichergestellt, dass das jeweilige Drehmoment nur auf die entsprechende Funktionseinrichtung wirkt. Zudem können die Drehmomentstützen jeweils passend für die beim Bremsen bzw. Beschleunigen auftretenden Drehmomente ausgelegt werden.
wobei eine Funktionseinrichtung der Beschleunigung und die andere Funktionseinrichtung dem Bremsen dient.

Im Folgenden wird die Erfindung anhand von Figuren, die ein bevorzugtes Ausführungsbeispiel zeigen, näher erläutert.

### Es zeigen

- Fig. 1:: einen Teil des erfindungsgemäßen Fahrzeuganhängers in der Seitenansicht;
- Fig. 2:: die Rückseite des in Figur 1 dargestellten Teils des erfindungsgemäßen Fahrzeuganhängers.

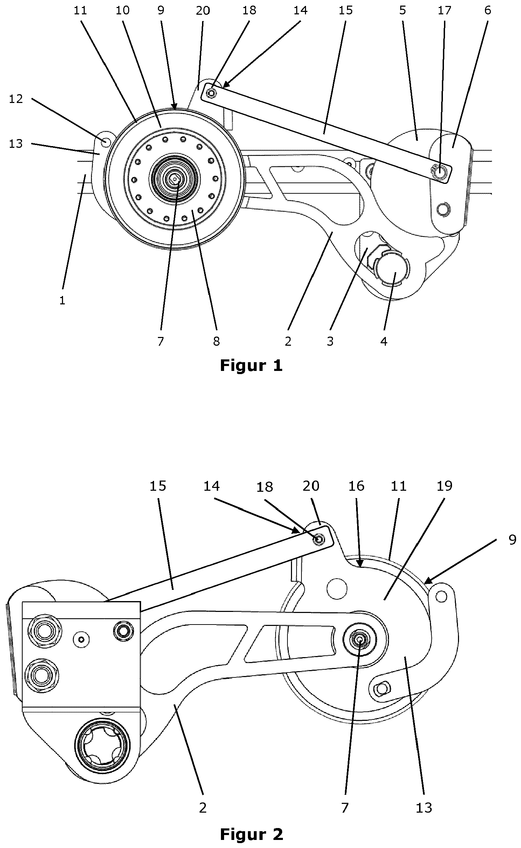

Figur 1 zeigt einen Teil eines erfindungsgemäßen Fahrzeuganhängers in der Seitenansicht. Der Fahrzeuganhänger ist als Anhänger für ein Fahrrad oder ein Pedelec ausgeführt. Der Fahrzeuganhänger weist zwei Räder sowie ein Chassis 1 auf, die nicht bzw. nicht vollständig dargestellt sind. Selbiges gilt für weitere Bauteile, die bei derartigen Fahrzeuganhängern 1 üblich sind. Auch wenn nachfolgend lediglich auf ein Rad des Fahrzeuganhängers Bezug genommen wird, kann grundsätzlich mehr als ein Rad die nachfolgend beschriebenen Bauteile aufweisen.

Der Fahrzeuganhänger weist eine Radschwinge 2 auf, die mit einem Ende mittels eines Halters 3 und einer Achse 4 drehbar an dem Chassis 1 gelagert ist. Auf die Radschwinge 2 wirkt ein Federungs- und Dämpfungselement 5, das mittels eines Halters 6 ebenfalls am Chassis 1 befestigt ist. Am anderen Ende der Radschwinge 2 ist eine Radachse 7 drehbar gelagert. Die Radachse 7 ist mit der Radnabe 8 eines nicht dargestellten Rades verbunden. Durch die Radschwinge 2 und das Federungs- und Dämpfungselement 5 werden Stöße durch Unebenheiten in der Fahrbahn während der Fahrt nicht unmittelbar in das Chassis 1 und in den Innenraum des Fahrzeuganhängers geleitet, sodass Sicherheit und Komfort erhöht werden.

Der Fahrzeuganhänger weist weiterhin eine Funktionseinrichtung in Form einer Trommelbremse 9 auf. Die Trommelbremse 9 umfasst ein Gehäuse 10 und einen Bremsträger 11. Der Bremsträger 11 ist an der Radschwinge 2 rotierbar gelagert. Im Inneren des Gehäuses weist die Trommelbremse 9 nicht rotierbare und am Bremsträger 11 befestigte Bremsbacken sowie eine Bremstrommel auf, die gemeinsam mit dem Rad bzw. der Radachse 7 rotiert. An der Trommelbremse 9 ist ferner ein Bremshebel 12 mit einer Durchgangsbohrung 13 angeordnet, an der ein Seil eines nicht dargestellten Seilzugs befestigt werden kann. Bei Betätigung des Seilzugs, beispielsweise durch den Fahrer des Zugfahrzeugs oder automatisch im Sinne einer Auflaufbremse beim Bremsvorgang des Zugfahrzeugs, wird der Bremshebel 13 entgegen des Uhrzeigersinns verschwenkt, wodurch die Bremsbacken gegen die Bremstrommel gedrückt werden und der Fahrzeuganhänger gebremst wird. Um eine Rotation des Bremsträgers 11 durch die dabei auftretenden Kräfte zu verhindern und diese in das Chassis 1 einleiten zu können, ist der Bremsträger 11 mit einer Drehmomentstütze 14 fest verbunden.

Figur 2 zeigt die Rückseite des in Figur 1 dargestellten Teils des Fahrzeuganhängers mit dem einzigen Unterschied, dass das Chassis 1 zur besseren Übersicht nicht dargestellt ist. Es ist erkennbar, dass die Drehmomentstütze 14 eine Stützschwinge 15 und eine Stützplatte 16 aufweist. Die Stützschwinge 15 ist an ihrem ersten Ende in einem Lagerungspunkt 17, der in Figur 1 zu sehen ist, am Chassis 1 rotierbar gelagert. An ihrem zweiten Ende weist die Stützschwinge 15 eine Gelenkverbindung 18 mit der Stützplatte 16 auf. Die Stützplatte 16 besteht aus einem im Wesentlichen kreisförmigen Element 19 und einem Hebelelement 20, an dem die Stützschwinge 15 über die Gelenkverbindung 18 angreift. Die Stützplatte 16 ist mit dem Bremsträger 11 fest verbunden. Sowohl die Stützplatte 16 als auch der Bremsträger 11 sind rotierbar an der Radschwinge 2 gelagert.

Wird die Trommelbremse 9 über den Hebel 13 gebremst, wird das auf das Rad wirkende Drehmoment über die Bremsbacken auf den Bremsträger 11 und von diesem auf die Stützplatte 16 übertragen. Dabei ist das auf die Stützplatte 16 wirkende Drehmoment durch den verhältnismäßig großen Radradius weitaus höher als das am Rad wirkende Drehmoment. Die rotierbare Lagerung der Stützplatte 16 an der Radschwinge 2 hat dabei den Effekt, dass nahezu keine Kräfte auf die Radschwinge 2 übertragen werden und diese stattdessen nahezu vollständig von der Stützplatte 16 über das Hebelelement 20 auf die Stützschwinge 15 und von dieser auf das Chassis 1 übertragen werden.

Federt der Fahrzeuganhänger durch Beladung oder während der Fahrt durch Unebenheiten in der Fahrbahn ein bzw. aus, werden die Radschwinge 2 und die Stützschwinge 15 im Wesentlichen parallel ausgelenkt. Die Radachse 7 beschreibt dabei eine, wenn auch überwiegend vertikale, kreisförmige Bewegung. Da die Drehmomentstütze 14 dieselbe Lagerachse wie die Radachse 7 aufweist, bewegt sie sich ebenfalls auf dieser Kreisbahn, wodurch sich der horizontale Abstand der Lagerachse zum Lagerungspunkt 17 der Stützschwinge 15 am Chassis 1 ändert. Diese Änderung wird durch die Rotation der Stützplatte 16 ausgeglichen, durch die sich die Position des Hebelelements 20 ändert und die horizontale Länge der Drehmomentstütze 14 entweder verlängert oder verkürzt werden kann. Auf diese Weise kann die Drehmomentstütze 14 teilweise parallel mit der Radschwinge 2 ausgelenkt werden, ohne die Federungs- und Dämpfungsfunktion des Fahrzeuganhängers zu beeinträchtigen.

### Bezugszeichen

- 1: Chassis
- 2: Radschwinge
- 3: Halter
- 4: Achse
- 5: Federungs- und Dämpfungselement
- 6: Halter
- 7: Radachse
- 8: Radnabe
- 9: Trommelbremse
- 10: Gehäuse
- 11: Bremsträger
- 12: Bremshebel
- 13: Durchgangsbohrung
- 14: Drehmomentstütze
- 15: Stützschwinge
- 16: Stützplatte
- 17: Lagerungspunkt
- 18: Gelenkverbindung
- 19: kreisförmiges Element
- 20: Hebelelement

## Patentansprüche

1. Fahrzeuganhänger, insbesondere für ein Fahrrad oder ein Pedelec, mit einem Chassis (1) und mindestens einer an dem Chassis (1) angeordneten Radschwinge (2) mit mindestens einem Rad, sowie mit mindestens einer von der Radschwinge gehaltenen Funktionseinrichtung zum Bremsen und/oder Beschleunigen eines Rades, **dadurch gekennzeichnet, dass** die Funktionseinrichtung mindestens eine Drehmomentstütze (14) aufweist, mit der die Funktionseinrichtung unter Umgehung der Radschwinge (2) am Chassis (1) abstützbar ist.

2. Fahrzeuganhänger nach Anspruch 1, **dadurch gekennzeichnet, dass** die Funktionseinrichtung durch die Einleitung einer im Wesentlichen horizontalen Kraft von der Drehmomentstütze (14) in das Chassis (1) abstützbar ist.

3. Fahrzeuganhänger nach Anspruch 1 oder 2, **dadurch gekennzeichnet, dass** die Drehmomentstütze (14) mit dem Chassis (1) gekoppelt ist und/oder ein Anschlag vorgesehen ist, über den sie sich chassisseitig abstützen kann.

4. Fahrzeuganhänger nach einem der vorstehenden Ansprüche, **dadurch gekennzeichnet, dass** die Drehmomentstütze (14) mit der Funktionseinrichtung gekoppelt ist und/oder ein Anschlag vorgesehen ist, über den sie sich an der Drehmomentstütze (14) abstützen kann.

5. Fahrzeuganhänger nach einem der vorstehenden Ansprüche, **dadurch gekennzeichnet, dass** die Drehmomentstütze (14) zumindest einen rotierbaren Teil aufweist, der um eine durch die Radschwinge (2) verlaufende Lagerachse der Funktionseinrichtung rotierbar ist und wobei der rotierbare Teil insbesondere gemeinsam mit zumindest einem Teil der Funktionseinrichtung um die Lagerachse der Funktionseinrichtung rotieren kann.

6. Fahrzeuganhänger nach einem der vorstehenden Ansprüche, durch eine am Chassis (1) gelagerte Stützschwinge (15) als Bestandteil der Drehmomentstütze (14), die vorzugsweise im Wesentlichen parallel zu der Radschwinge (2) schwingt.

7. Fahrzeuganhänger nach einem der vorstehenden Ansprüche, **dadurch gekennzeichnet, dass** die Drehmomentstütze (14) ein Eingriffselement zum Eingriff in eine Kulisse eines Kulissenelements aufweist, von denen das eine mit der Funktionseinrichtung und das andere mit dem Chassis (1) gekoppelt ist.

8. Fahrzeuganhänger nach einem der vorstehenden Ansprüche, **dadurch gekennzeichnet, dass** mindestens eine Funktionseinrichtung als Bremseinrichtung ausgebildet ist.

9. Fahrzeuganhänger nach Anspruch 8, **dadurch gekennzeichnet, dass** die Bremseinrichtung als mechanische Bremse, insbesondere als Trommelbremse (9) oder Scheibenbremse, ausgeführt ist, wobei ein erster Funktionsteil der Bremseinrichtung im Betrieb des Fahrzeuganhängers mit dem mindestens einen Rad rotiert und ein zweiter Funktionsteil zur Aufbringung eines Bremsmomentes auf das mindestens eine Rad über die Drehmomentstütze (14) am Chassis (1) abstützbar ist.

10. Fahrzeuganhänger nach einem der vorstehenden Ansprüche, **dadurch gekennzeichnet, dass** die mindestens eine Funktionseinrichtung als elektrischer Antrieb ausgebildet und insbesondere ein Elektromotor ist.

11. Fahrzeuganhänger nach einem der Ansprüche 8 bis 10, **gekennzeichnet durch** mindestens zwei Funktionseinrichtungen, wobei eine erste Funktionseinrichtung eine Bremseinrichtung und eine zweite Funktionseinrichtung ein elektrischer Antrieb ist und wobei die Funktionseinrichtungen hintereinander angeordnet sind und eine gemeinsame Lagerachse aufweisen, sodass sie auf dasselbe Rad wirken können.

12. Fahrzeuganhänger nach Anspruch 11, **dadurch gekennzeichnet, dass** sich jede der mindestens zwei Funktionseinrichtungen über jeweils eine Drehmomentstütze (14) am Chassis (1) abstützt, wobei die den Funktionseinrichtungen zugeordneten Drehmomentstützen (14) unabhängig voneinander um die gemeinsame Lagerachse der Funktionseinrichtungen rotierbar sind.
